Europäisches Patentamt

European Patent Office

Office européen des brevets

(19)

(11) Veröffentlichungsnummer: **0 326 840**
**B1**

(12) **EUROPÄISCHE PATENTSCHRIFT**

(45) Veröffentlichungstag der Patentschrift:
14.11.90

(21) Anmeldenummer: 89100650.4

(22) Anmeldetag: **16.01.89**

(51) Int. Cl.⁵: **G01N 23/04**, G03B 42/02,
H04N 5/32

(54) Verfahren und Vorrichtung zum Erzeugen eines Durchstrahlungsbildes.

(30) Priorität: 03.02.88 DE 3803129

(43) Veröffentlichungstag der Anmeldung:
09.08.89 Patentblatt 89/32

(45) Bekanntmachung des Hinweises auf die Patenterteilung:
14.11.90 Patentblatt 90/46

(84) Benannte Vertragsstaaten:
DE FR GB

(56) Entgegenhaltungen:
EP-A- 0 098 398
EP-A- 0 205 825
EP-A- 0 234 922
EP-A- 0 263 080
DE-U- 8 307 020
US-A- 4 030 119

Patent Abstracts of Japan, Band 8,
Nr. 214 (P-304)(1651), 29. September 1984 &
JP-A-59-97043

(73) Patentinhaber: ISOTOPEN-TECHNIK DR. SAUERWEIN
GMBH, Bergische Strasse 16,
D-5657 Haan/Rheinl. 1(DE)

(72) Erfinder: Sauerwein, Kurt, Dr., Kattendahl 7,
D-4006 Erkrath(DE)
Erfinder: Link, Rainer, Dr., Buchenhöhe 1,
D-5014 Kerpen-Horrem(DE)
Erfinder: Nuding, Wolfgang, Dr., Am Gerstenkamp 8,
D-5210 Troisdorf(DE)
Erfinder: Wiacker, Helmut, Dipl.-Phys.,
Schumannstrasse 4, D-4010 Hilden(DE)
Erfinder: Zindler, Wolfgang, Eichendorffstrasse 53,
D-4047 Dormagen 5(DE)
Erfinder: Monsau, Thomas, Dipl.-Phys., Düsseldorfer
Strasse 89, D-4000 Düsseldorf-Oberkassel(DE)

(74) Vertreter: König, Reimar, Dr.-Ing. et al, Patentanwälte
Dr.-Ing. Reimar König Dipl.-Ing. Klaus Bergen
Wilhelm-Tell-Strasse 14 Postfach 260162,
D-4000 Düsseldorf 1(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Vorrichtung zum Erzeugen eines Durchstrahlungsbildes mit einer auf einer Seite eines Körpers angeordneten Strahlenquelle für energiereiche Strahlung und einer auf der anderen Seite des Körpers angeordneten Aufnahmevorrichtung für das Durchstrahlungsbild, insbesondere zur Verwendung in der zerstörungsfreien Werkstoffprüfung.

Aus der DE-OS 35 20 600 ist eine Vorrichtung zur zerstörungsfreien Durchstrahlungsprüfung bekannt, bei der die Strahlen einer Röntgen- oder Gammastrahlenquelle ein zwischen der Strahlenquelle und einem Leuchtschirm angeordnetes Werkstück durchdringen und auf einem Leuchtschirm ein Strahlenbild erzeugen, das mittels einer Fernsehkettenübertragung auf einem Fernsehmonitor abgebildet wird. Das Durchstrahlungsbild wird in Echtzeit wiedergegeben und ist ein Schattenbild, das unterschiedlich dichte oder dicke Werkstoffe verschieden hell darstellt. Bei der zerstörungsfreien Durchstrahlungsprüfung von Werkstücken kommen sehr häufig nebeneinanderliegende und sehr große Dickenunterschiede vor, beispielsweise bei Motorblöcken, Schweißnähten und anderen komplexen Bauteilen. Da in solchen, oft dicht nebeneinanderliegenden unterschiedlichen Wanddicken auch sehr kleine Fehler sichtbar gemacht werden müssen, ist der für das bildgebende System erforderliche Kontrastumfang sehr hoch. Wegen der häufig starken Dickenunterschiede innerhalb eines Bildes kommt es an den Stellen geringer Wanddicke oder bei fehlendem Material zu so starken Überstrahlungen, daß es einmal zu einer Beschädigung der Fernsehaufnahmeröhre kommen kann und daß zum anderen der technisch mögliche Kontrastumfang nicht ausreicht, um auch kleine Unterschiede, die auf kleine Fehler hindeuten, sichtbar zu machen. Es ist somit schwierig, zu einer schnellen und genau lokalisierenden Aussage über Fehler im Untersuchungsgut zu gelangen.

Aus der DE-OS 32 24 964 sind ein Durchstrahlungsverfahren und eine Durchstrahlungsvorrichtung zum Materialprüfen bekannt, bei denen ein ortsauflösender Strahlendetektor und eine Strahlenquelle in einer durch die Strahlenquelle und den Strahlendetektor aufgespannten Ebene um eine dazu senkrechte Achse relativ zum Untersuchungsgut mittels eines drehbaren Objektträgers drehbar angeordnet sind. Bei jedem Drehwinkel wird die Ortsverteilung der Strahlungsintensität mit Hilfe einer Auswerteelektronik ermittelt. Auf diese Weise werden in einer dünnen Schicht, die durch die erwähnte, von der Strahlungsquelle und dem Strahlendetektor aufgespannten Ebene bestimmt ist, eine Vielzahl von Messungen in verschiedenen Winkelpositionen durchgeführt und dabei jeweils eine lineare Durchstrahlungsprojektion ermittelt. In einem Elektronenrechner werden diese verschiedenen Projektionen durch Logarithmierung, Faltungen und Entfaltungen in der aus der Computer-Tomographie bekannten Weise zum Erzeugen eines Schichtbildes des Untersuchungsguts verarbeitet und anschließend auf einem Bildschirm dargestellt oder anderweitig abgespeichert.

Mit diesem Verfahren lassen sich dünne Materialschichten auf eine Strahlungsschwächung hin untersuchen und alle Einzelheiten des Schichtbildes mit hohem Auflösungsvermögen darstellen. Allerdings ist eine erhebliche Zeit erforderlich, um ein Schichtbild zu erzeugen, da jedesmal eine Drehung um 1 bis 2° erforderlich ist, bis ein Winkelbereich von mindestens 180° überschritten ist. Auch die Aufbereitung der Durchstrahlungswerte im Rechner erfordert verhältnismäßig viel Zeit, da die Rechenoperationen sehr aufwendig und kompliziert sind. Um einen sicherheitskritischen Körper vollständig zu untersuchen müssen Schichtbilder in Abständen von einigen Millimetern angefertigt werden, so daß die Computer-Tomographie bei der zerstörungsfreien Werkstoffprüfung nur in Sonderfällen angewandt wird. Andere Dokumente die den Stand der Technik aufweisen sind: EP-A 234 922 und US-A 4 030 119.

Der Erfindung liegt die Aufgabe zugrunde, ein Verfahren und eine Vorrichtung zum Erzeugen eines Durchstrahlungsbildes zu schaffen, mit denen es möglich ist, einen Körper verhältnismäßig schnell und trotzdem mit großer Genauigkeit auf Fehler zu untersuchen.

Gelöst wird diese Aufgabe bei einer Vorrichtung der eingangs erwähnten Art erfindungsgemäß durch die Kombination einer Echtzeitwiedergabekette für das Durchstrahlungsbild mit einer Fernsehkamera, einem Bildschirm und einem Computer-Tomographen zum zeilenweisen Auswerten des Durchstrahlungsbildes und Darstellen eines Querschnitts des durchstrahlten Körpers auf dem Bildschirm.

Mit dieser Kombination ist es möglich, zunächst auf dem Fernsehschirm das Durchstrahlungsbild des zu untersuchenden Körpers als Ganzes zu betrachten und dann die Schichten zu bestimmen, die mittels des Computer-Tomographen auf dem Bildschirm dargestellt werden sollen, um einen detailgenauen Querschnitt des zu untersuchenden Körpers zu liefern, in dem sich etwaige Fehler mit großer Genauigkeit erkennen lassen. Auf diese Weise wird die Anzahl der erforderlichen Schichtbilder auf das unbedingt notwendige Maß verringert und die Prüfung erheblich beschleunigt.

Die Aufnahmevorrichtung für das Durchstrahlungsbild kann aus einem Röntgenbildverstärker und einer nachgeschalteten Fernsehkamera bestehen. Ebenso kann die Aufnahmevorrichtung für das Durchstrahlungsbild aus einem Röntgenbildschirm mit einem nachgeschalteten Lichtverstärker und einer Fernsehkamera bestehen.

Zum Erstellen des Schichtbildes kann ein ortsauflösender Zeilendetektor im Strahlengang des Durchstrahlungsbildes angeordnet sein, wobei die Fernsehkamera und/oder der Zeilendetektor beweglich angeordnet sein können oder aber das Durchstrahlungsbild mittels eines beweglichen Spiegels auf die Fernsehkamera oder auf den Zeilendetektor gerichtet wird. Schließlich ist es auch möglich, einen halbdurchlässigen Spiegel im Strahlengang des Durchstrahlungsbildes anzuordnen und das durchgelassene oder das gespiegelte Bild auf die Fernsehkamera oder den Zeilendetektor zu lenken.

Wird ein ortsauflösender Zeilendetektor eingesetzt, um die Meßdaten für das Schichtbild zu liefern, sind entweder eine relativ zum Körper drehbare und höheneinstellbare Strahlenquelle und Aufnahmevorrichtung oder ein drehbarer und höheneinstellbarer Manipulator für den zu durchstrahlenden Körper oder ein drehbarer Manipulator für den zu durchstrahlenden Körper und eine Höheneinstellvorrichtung für den Zeilen detektor und die Strahlenquelle erforderlich, um den Körper relativ zur Strahlenquelle und zum Aufnahmesystem oder dem Zeilendetektor einzustellen. Vorzugsweise wird das Fernsehbild direkt verwendet, um die Meßwerte für den Computer-Tomographen zu liefern. Zu diesem Zweck ist hinter der Fernsehkamera ein Bildspeicher angeordnet, und der Computer-Tomograph ist zum zeilenweisen Auswerten des Bildes mit dem Bildspeicher verbunden. In diesem Falle braucht der zu untersuchende Körper mittels des Manipulators nur schrittweise gedreht zu werden, während von der Bedienperson eine gewünschte Zeile des Fernsehbildes ausgewählt und eingegeben wird, um hieraus das Schichtbild zu erzeugen.

Um eine bestimmte Schicht zur computer-tomographischen Darstellung eines Schichtbildes zu bestimmen, können auf dem Bildschirm Zeilenmarkierungen angeordnet sein, und eine ausgewählte Zeilenmarkierung kann dann in eine Zeilenwählvorrichtung eingegeben werden, die mit der Höheneinstellvorrichtung des Manipulators oder des Zeilendetektors oder der Strahlenquelle oder mit dem Bildspeicher verbunden ist.

Es ist aber auch möglich, eine rein elektronische Zeilenwählvorrichtung zu verwenden, wenn zwischen der Fernsehkamera und dem Bildschirm ein Bildverarbeitungsgerät angeordnet ist. In diesem Fall ist die Zeilenwählvorrichtung mit dem Bildverarbeitungsgerät und der Höheneinstellvorrichtung des Manipulators oder des Zeilendetektors oder mit dem Bildverarbeitungsgerät und dem Bildspeicher verbunden.

Bei dem erfindungsgemäßen Verfahren zum Erzeugen eines Durchstrahlungsbildes eines Körpers wird mittels einer Echtzeitwiedergabekette ein Durchstrahlungsbild auf einem Bildschirm erzeugt, anhand des dargestellten Bildes eine Zeile zum Darstellen eines computer-tomographischen Schichtbildes gewählt und eingestellt sowie die computer-tomographische Messung durch schrittweises Drehen des Körpers durchgeführt. Die Meßwerte werden gespeichert, aufbereitet, und das Bild wird rekonstruiert und auf einem Bildschirm dargestellt. Vorzugsweise werden die Bildpunkte des Fernsehbildes in einem zwei-dimensionalen Bildspeicher gespeichert und die Bildpunkte jeder Zeile durch einen Computer-Tomographen zu einem Schichtbild dieser Zeile rekonstruiert.

Die Erfindung wird nachstehend anhand mehrerer in der Zeichnung dargestellter Ausführungsbeispiele des näheren erläutert. In der Zeichnung zeigen:

Fig. 1 ein Funktionsschema der erfindungsgemäßen Vorrichtung mit einem Röntgenbildverstärker, einer nachgeschalteten Fernsehkamera und einer Seitenansicht des zu untersuchenden Körpers,

Fig. 2 eine Draufsicht auf den Teil der Vorrichtung zum Erzeugen eines Durchstrahlungsbildes,

Fig. 3 eine Draufsicht entsprechend Fig. 2 mit einem Röntgenbildschirm mit einem nachgeschalteten Lichtverstärker und einer Fernsehkamera und

Fig. 4 ein Funktionsschema der erfindungsgemäßen Vorrichtung mit im Strahlengang angeordnetem ortsauflösenden Zeilendetektor.

Mittels einer Strahlenquelle 1, die aus einer Röntgenröhre oder einem Gamma-Strahler bestehen kann, wird energiereiche Strahlung durch einen zu untersuchenden Körper 2 hindurch geschickt. Der Körper 2 ist drehbar auf einem Manipulator 13 angeordnet. Im Strahlengang der Strahlenquelle 1 befindet sich ein Röntgenbildverstärker 3 dessen Bild über eine Optik 4 in eine Fernsehkamera 5 gelangt. Dieses Durchstrahlungsbild trifft über ein Bildverarbeitungsgerät 7 auf einen Bildschirm 10 und erscheint dort als übliches Röntgenschattenbild, das sich in Echtzeit betrachten läßt.

In diesem Bild kann man mittels des Bildverarbeitungsgerätes 7 oder durch Ablesen von Zeilenmarkierungen 11 bestimmen, für welchen Querschnitt des Körpers 2 eine Computer-Tomographie-Messung durchgeführt werden soll. Zu diesem Zweck ist eine Zeilenwählvorrichtung 12 zwischen dem Bildverarbeitungsgerät 7 und einem Bildspeicher 6 angeordnet.

In diesem Bildspeicher 6 werden die durch die Fernsehkamera 5 erzeugten Bildpunkte zweidimensional und entsprechend ihren Grauwerten gespeichert. Je nach Anzahl der Zeilen des Fernsehbildes lassen sich somit im Bildspeicher gleichzeitig die Daten für 512 bis 1024 Schichtbilder speichern. Durch Drehen des Körpers 2 mittels des Manipulators 13 jeweils um einen kleinen Winkel von 1 bis 2°, bis ein Winkelbereich von mindestens 180° überstrichen ist, lassen sich die für die Computer-Tomographie erforderlichen Meßwerte bestimmen und im Bildspeicher 6 abspeichern. Diese Meßwerte gelangen anschließend in einen Rechner 8, werden dort zum Schichtbild rekonstruiert, über einen weiteren Bildspeicher 9 zum Fernsehschirm 10 geleitet und dort dargestellt.

Da durch die Fernsehkamera 5 schon ein zeilenweises Zerlegen des Bildes im Röntgenbildverstärker 3 erfolgt, ist nur eine Rotation des Körpers 2, nicht aber eine senkrechte Translation erforderlich.

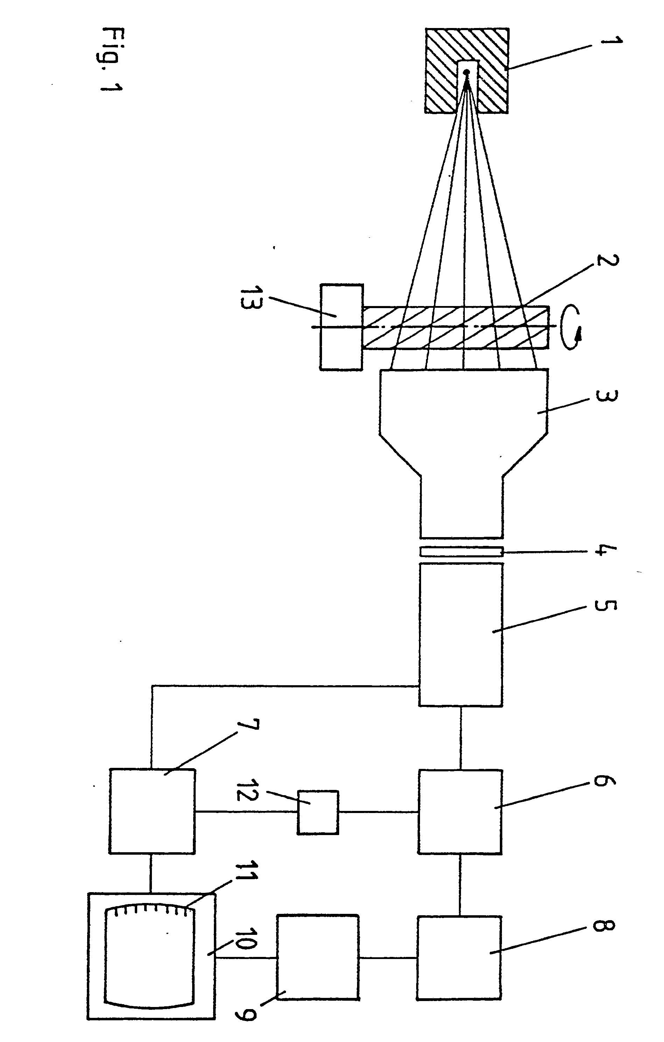

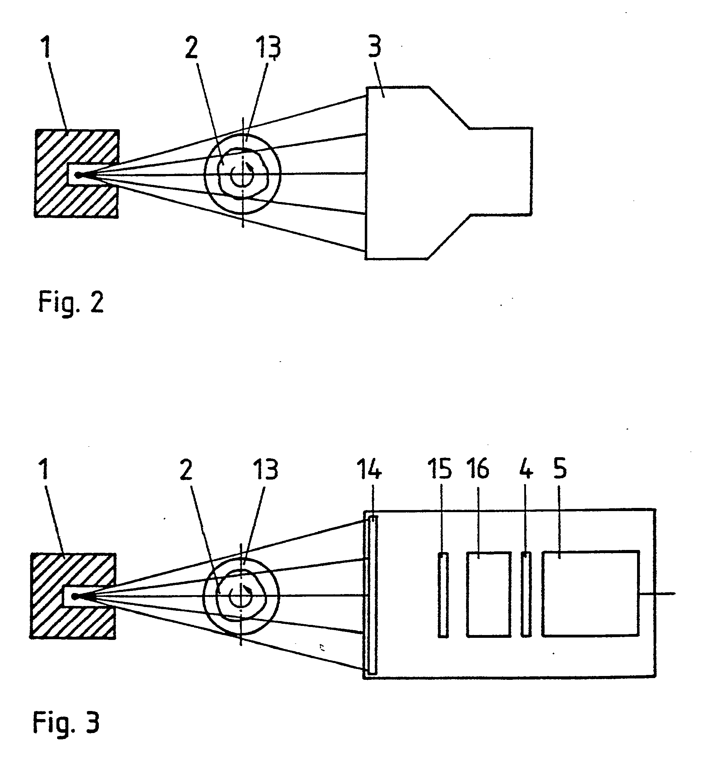

Die in Fig. 3 dargestellte Vorrichtung unterscheidet sich von der in Fig. 1 und 2 dargestellten nur insofern, als das Durchstrahlungsbild auf einem Röntgenbildschirm 14 erscheint und über eine Optik 15, einen Lichtverstärker 16 sowie eine weitere Optik 4 in die Fernsehkamera 5 gelangt. Die Bildaufbereitung geschieht in derselben Weise wie bei der Vorrichtung gemäß Fig. 1 und 2.

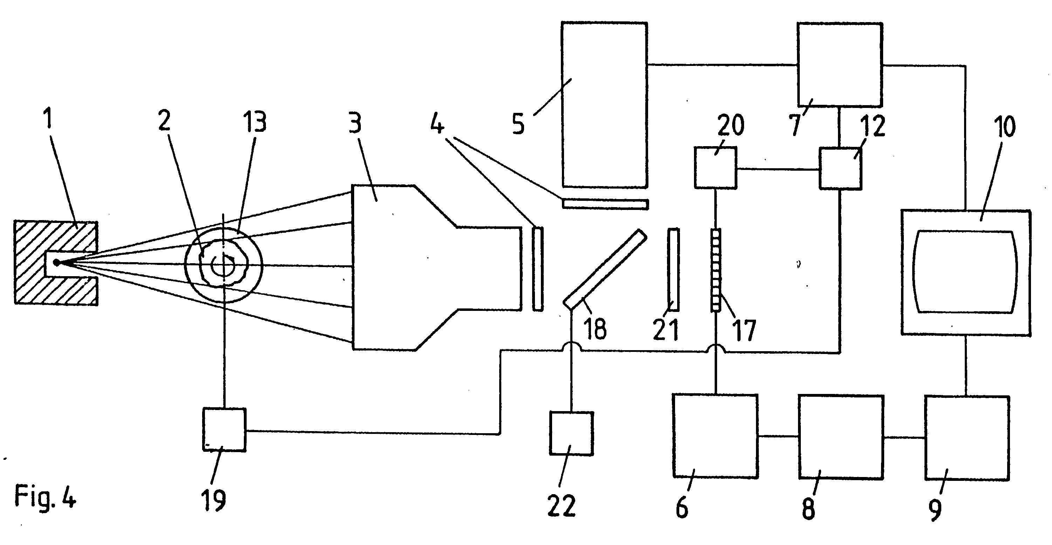

Bei der Vorrichtung gemäß Fig. 4 befindet sich im Anschluß an die Optik 4 hinter dem Röntgenbildverstärker 3 ein halbdurchlässiger oder beweglicher Spiegel 18. Die Fernsehkamera 5 ist senkrecht zum Strahlengang des Röntgenbildverstärkers 3 angeordnet, so daß das Bild in die Fernsehkamera 5 fällt, wenn der Spiegel 18 die dargestellte Lage einnimmt.

Im Strahlengang des Röntgenbildverstärkers 3 ist hinter einer weiteren Optik 21 ein ortsauflösender Zeilendetektor 17 angeordnet. Falls der Spiegel 18 halbdurchlässig ist, fällt das gespiegelte Bild in die Fernsehkamera 5, und das durchgelassene Bild auf den Zeilendetektor 17. Falls der Spiegel 18 undurchlässig ist, muß er mittels einer Drehvorrichtung 22 weggeklappt werden, wenn das Bild des Röntgenbildverstärkers 3 auf den ortsauflösenden Zeilendetektor 17 fallen soll.

Da der Zeilendetektor 17 jeweils nur eine Zeile erfassen soll, d.h. zur Aufnahme eines bestimmten Schichtbildes bestimmt ist, muß entweder der Manipulator 13 oder der Zeilendetektor 17 eine Höheneinstellvorrichtung 19 bzw. 20 aufweisen. Die Höheneinstellvorrichtung 19 oder 20 ist mit einer Zeilenwählvorrichtung 12 verbunden, die an das Bildverarbeitungsgerät 7 angeschlossen ist.

Das Echtzeitdurchstrahlungsbild gelangt über den Röntgenbildverstärker 3, den Spiegel 18, die Fernsehkamera 5 und das Bildverarbeitungsgerät 7 zum Bildschirm 10, während das computer-tomographische Schichtbild über den Zeilendetektor 17, den Bildspeicher 6, den Rechner 8 und den weiteren Bildspeicher 9 erzeugt wird und ebenfalls auf dem Bildschirm 10 abgebildet wird.

Die Auswahl des Schichtbildes erfolgt mittels der Zeilenwählvorrichtung 12 in der gleichen Weise wie bei der Vorrichtung gemäß Fig. 1.

**Patentansprüche**

1. Vorrichtung zum Erzeugen eines Durchstrahlungsbildes mit einer auf einer Seite eines Körpers angeordneten Strahlenquelle für energiereiche Strahlung, einer auf der anderen Seite des Körpers angeordneten Aufnahmevorrichtung und einem Computer-Tomographen zum Auswerten des Durchstrahlungsbildes und zum Darstellen eines Querschnitts des durchstrahlten Körpers auf einem Bildschirm, dadurch gekennzeichnet, daß die Aufnahmevorrichtung eine mit dem Bildschirm (10) sowie dem Computer-Tomographen (8) verbundene Fernsehkamera (5) aufweist und eine Echtzeit-Wiedergabekette (4, 5, 6, 7, 10) bildet und daß eine Zeilenwählvorrichtung (12) mit dem Bildschirm (10) und dem Computer-Tomographen (8) zum wählbaren zeilenweisen Auswerten des Durchstrahlungsbildes verbunden ist.

2. Vorrichtung nach Anspruch 1, dadurch gekennzeichnet, daß die Aufnahmevorrichtung für das Durchstrahlungsbild aus einem Röntgenbildverstärker (3) und einer nachgeschalteten Fernsehkamera (5) besteht.

3. Vorrichtung nach Anspruch 1, dadurch gekennzeichnet, daß die Aufnahmevorrichtung für das Durchstrahlungsbild aus einem Röntgenbildschirm (14) mit einem nachgeschalteten Lichtverstärker (16) und der Fernsehkamera (5) besteht.

4. Vorrichtung nach Anspruch 1, 2 oder 3, dadurch gekennzeichnet, daß ein ortsauflösender Zeilendetektor (17) im Strahlengang des Durchstrahlungsbildes angeordnet ist.

5. Vorrichtung nach Anspruch 4, dadurch gekennzeichnet, daß die Fernsehkamera (5) und/oder der Zeilendetektor (17) beweglich angeordnet sind.

6. Vorrichtung nach Anspruch 4, dadurch gekennzeichnet, daß ein beweglicher Spiegel (18) zwischen dem Durchstrahlungsbild und der Fernsehkamera (5) bzw. dem Zeilendetektor (17) angeordnet ist.

7. Vorrichtung nach Anspruch 4, dadurch gekennzeichnet, daß ein halbdurchlässiger Spiegel (18) im Strahlengang des Durchstrahlungsbildes angeordnet ist, der das durchgelassene Bild auf die Fernsehkamera (5) und das gespiegelte Bild auf den Zeilendetektor (17) lenkt bzw. umgekehrt.

8. Vorrichtung nach einem oder mehreren der Ansprüche 4 bis 7, gekennzeichnet durch eine relativ zum Körper (2) drehbare und höheneinstellbare Strahlenquelle (1) und Aufnahmevorrichtung (3, 4, 5).

9. Vorrichtung nach einem oder mehreren der Ansprüche 4 bis 8, gekennzeichnet durch einen drehbaren und höheneinstellbaren Manipulator (19) für den Körper (2).

10. Vorrichtung nach einem oder mehreren der Ansprüche 4 bis 8, gekennzeichnet durch einen drehbaren Manipulator (19) für den Körper (2) und eine Höheneinstellvorrichtung (20) für den Zeilendetektor (17) und die Strahlenquelle (1).

11. Vorrichtung nach Anspruch 1, 2 oder 3, dadurch gekennzeichnet, daß hinter der Fernsehkamera (5) ein Bildspeicher (6) angeordnet und der Computer-Tomograph (8) zum zeilenweisen Auswerten des Bildes mit den Bildspeicher verbunden ist.

12. Vorrichtung nach Anspruch 9, 10 oder 11, dadurch gekennzeichnet, daß auf dem Bildschirm (10) Zeilenmarkierungen (11) angeordnet sind und die Zeilenwählvorrichtung (12) mit der Höheneinstellvorrichtung des Manipulators (19) oder des Zeilendetektors (17) oder dem Bildspeicher (6) verbunden ist.

13. Vorrichtung nach Anspruch 9, 10 oder 11, dadurch gekennzeichnet, daß zwischen der Fernsehkamera (5) und dem Bildschirm (10) ein Bildverarbeitungsgerät (7) angeordnet ist und die Zeilenwählvorrichtung (12) mit dem Bildverarbeitungsgerät (7) und der Höheneinstellvorrichtung des Manipulators (19) oder des Zeilendetektors (17) oder der Strahlenquelle (1) oder mit dem Bildverarbeitungsgerät (7) und dem Bildspeicher (6) verbunden ist.

14. Verfahren zum Erzeugen eines Durchstrahlungsbildes mit einer auf einer Seite eines Körpers angeordneten Strahlenquelle für energiereiche Strahlung, einer auf der anderen Seite des Körpers angeordneten Aufnahmevorrichtung und einem Computer-Tomographen zum Auswerten des Durchstrahlungsbildes und zum Darstellen eines Querschnitts des durchstrahlten Körpers auf einem Bildschirm, dadurch gekennzeichnet, daß mittels einer Echtzeit-Wiedergabekette ein Durchstrahlungsbild auf einem Bildschirm erzeugt, anhand des dargestellten Bildes eine Zeile zur Darstellung eines computer-tomographischen Schichtbildes gewählt, eingestellt und die computer-tomographische Messung durch schrittweises Drehen des Körpers durchgeführt wird, daß die Meßwerte gespeichert und aufbereitet werden, das Bild rekonstruiert und auf einem Bildschirm dargestellt wird.

15. Verfahren nach Anspruch 14, dadurch gekennzeichnet, daß die Bildpunkte des Fernsehbildes in einem zweidimensionalen Bildspeicher gespeichert und die Bildpunkte jeder Zeile durch den Computer-Tomographen zu einem Schichtbild dieser Zeile rekonstruiert werden.

## Revendications

1. Dispositif pour la production d'une image radiographique comportant une source de rayons pour un rayonnement à haute énergie, agencée d'un côté d'un corps, un dispositif de réception agencé de l'autre côté du corps et un tomographe assisté par calculateur pour l'évaluation de l'image radiographique et pour la représentation sur un écran d'une coupe transversale à travers le corps radiographié, caractérisé en ce que le dispositif de réception comporte une caméra de télévision (5) reliée à l'écran (10) ainsi qu'au tomographe assisté par calculateur (8) et forme une chaîne de reproduction en temps réel (4, 5, 6, 7, 10), et en ce qu'un dispositif de sélection de lignes (12) est relié à l'écran (10) et au tomographe assisté par calculateur (8) pour l'évaluation sélectionnable par lignes de l'image radiographique.

2. Dispositif selon la revendication 1 caractérisé en ce que le dispositif de réception de l'image radiographique consiste en une amplification d'image produite par rayons X (3) et en une caméra de télévision (5) montée en aval.

3. Dispositif selon la revendication 1 caractérisé en ce que le dispositif de réception de l'image radiographique consiste en un écran pour images produites par rayons X (14), équipé d'un amplificateur de lumière (16) monté en aval et en la caméra de télévision (5).

4. Dispositif selon la revendication 1, 2 ou 3 caractérisé en ce qu'un détecteur de lignes à résolution locale (17) est agencé dans le faisceau de rayons de l'image radiographique.

5. Dispositif selon la revendication 4 caractérisé en ce que la caméra de télévision (5) et/ou le détecteur de lignes (17) sont agencés de façon mobile.

6. Dispositif selon la revendication 4 caractérisé en ce qu'un miroir mobile (18) est agencé entre l'image radiographique et la caméra de télévision (5) ou le détecteur de lignes (17).

7. Dispositif selon la revendication 4 caractérisé en ce qu'un miroir semi-transparent (18) est agencé dans le faisceau de rayons de l'image radiographique et guide l'image passante sur la caméra de télévision (5) et l'image réfléchie sur le détecteur de lignes (17) ou inversément.

8. Dispositif selon l'une ou plusieurs des revendications 4 à 7 caractérisé par une source de rayonnement (1) et un dispositif de réception (3, 4, 5) réglables en hauteur et pivotables, par rapport au corps (2).

9. Dispositif selon l'une ou plusieurs des revendications 4 à 8 caractérisé par un organe de commande (19) pivotable et réglable en hauteur, pour le corps (2).

10. Dispositif selon l'une ou plusieurs des revendications 4 à 8 caractérisé par un organe de commande (19) pivotable pour le corps (2) et un dispositif de réglage en hauteur (20) du détecteur de lignes (17) et de la source de rayonnement (1).

11. Dispositif selon la revendication 1, 2 ou 3 caractérisé en ce qu'une mémoire d'images (6) est agencée en aval de la caméra de télévision (5) et en ce que le tomographe assisté par calculateur (8) est relié a la mémoire d'images pour l'évaluation par lignes de l'image.

12. Dispositif selon la revendication 9, 10, ou 11 caractérisé en ce que l'écran (10) comporte des marquages de lignes (11) et en ce que le dispositif de sélection de lignes (12) est relié au dispositif de réglage en hauteur de l'organe de commande (19) ou au détecteur de lignes (17) ou à la mémoire d'images (6).

13. Dispositif selon la revendication 9, 10 ou 11 caractérisé en ce qu'un dispositif de traitement d'images (7) est agencé entre la caméra de télévision (5) et l'écran (10) et en ce que le dispositif de sélection de lignes (12) est relié au dispositif de traitement d'images (7) et au dispositif de réglage en hauteur de l'organe de commande (19) ou du détecteur de lignes (17) ou de la source de rayonnement (I) ou au dispositif de traitement d'images (7) et à la mémoire d'images (6).

14. Procédé pour la production d'une image radiographique à l'aide d'une source de rayonnement à haute énergie agencée d'un côté d'un corps, d'un dispositif de réception agencé de l'autre côté du corps et d'un tomographe assisté par calculateur pour l'évaluation de l'image radiographique et pour la représentation sur l'écran d'une coupe transversale à travers le corps, caractérisé en ce qu'on produit sur un écran à l'aide d'une chaîne de reproduction en temps réel, une image radiographique, en ce qu'on sélectionne et règle une ligne dans l'image représentée en vue d'une représentation tomographique assistée par calculateur et en ce qu'on effectue la mesure tomographique assistée par calculateur, par rotation pas à pas du corps, en ce qu'on mémorise et traite les valeurs mesurées, en ce qu'on reconstruit l'image et la reproduit sur écran.

15. Procédé selon la revendication 14 caractérisé en ce que les points de l'image à l'écran sont mémorisés dans une mémoire bidimensionnelle et en ce que les points d'image de chaque ligne sont assemblés par le tomographe assisté par calculateur pour reconstituer une tomographie de cette ligne.

## Claims

1. A device for producing a radiographic image of a body having a source of high-energy radiation arranged on one side of the body, a pick-up device arranged on the other side of the body and a computer-tomograph for evaluation of the radiographic image and for displaying a cross-section of the radiographed body on a screen, characterised in that the pick-up device has a television camera (5) connected to the screen (10) and the computer-tomograph (8) and forms a real-time reproducing system (4, 5, 6, 7, 10) and that a row-selecting device (12) is connected to the screen (10) and the computer-tomograph for evaluation of the radiographic image in selectable rows.

2. A device according to claim 1, characterised in that the device for picking up the radiographic image comprises an X-ray image amplifier (3) followed by a television camera (5).

3. A device according to claim 1, characterised in that the device for picking up the radiographic image comprises an X-ray screen (14) followed by a light amplifier (16) and the television camera (5).

4. A device according to claim 1, claim 2 or claim 3, characterised in that a high resolution row-detector (17) is arranged in the beam path of the radiographic image.

5. A device according to claim 4, characterised in that the television camera (5) and/or the row-detector (17) are/is movable.

6. A device according to claim 4, characterised in that a movable mirror (18) is arranged between the radiographic image and the television camera (5) or the row-detector (17).

7. A device according to claim 4, characterised in that a semi-transparent mirror (18) is arranged in the beam path of the radiographic image which directs the transmitted image towards the television camera (5) and the reflected image towards the row-detector (17), or vice versa.

8. A device according to any one or more of claims 4 to 7, characterised by a radiation source (1) and pickup device (3, 4, 5) that are rotatable relative to the body (2) and adjustable in height.

9. A device according to any one of claims 4 to 8, characterised by a rotatable and height-adjustable manipulator (19) for the body (2).

10. A device according to any one or more of claims 4 to 8, characterised by a rotatable manipulator (19) for the body (2) and a height-adjusting device (20) for the row-detector (17) and the radiation source (1).

11. A device according to claim 1, 2 or 3, characterised in that an image store (6) arranged behind the television camera (5) and the computer-tomograph (8) for row-wise evaluation of the image is connected to the image store.

12. A device according to claim 9, 10 or 11, characterised in that there are row markings (11) on the screen (10) and the row-selecting device (12) is connected to the height-adjusting device of the manipulator (19) or of the row-detector (17) or to the image store (6).

13. A device according to claim 9, 10 or 11, characterised in that between the television camera (5) and the screen (10) there is an image processing device (7) and the row-selecting device (12) is connected to the image processing device (7) and to the height-adjusting device of the manipulator (19) or of the row-detector (17), and to the image store (6).

14. A method for producing a radiographic image of a body having a source of high-energy radiation arranged on one side of the body, a pick-up device arranged on the other side of the body and a computer-tomograph for evaluation of the radiographic image and for displaying a cross-section of the radiographed body on a screen, characterised in that by means of a real-time reproducing system a radiographic image is produced on a screen, and with reference to the image displayed a row for displaying a computer-tomographic layer image is selected, the computer-tomographic readings are carried out by rotating the body stepwise, the data are stored and edited, and the image is reconstructed and displayed on a screen.

15. A method according to claim 14, characterised in that the image points of the television image are stored in a two-dimensional image store and the image points of each row are reconstructed by the computer tomograph to form a layer image of this row.

Fig. 1

Fig. 2

Fig. 3

Fig. 4